# EUROPÄISCHE PATENTSCHRIFT

(11) **EP 1 930 699 B1**
(45) Veröffentlichungstag und Bekanntmachung des Hinweises auf die Patenterteilung: **04.04.2018**
(21) Anmeldenummer: 07122221.0
(22) Anmeldetag: 04.12.2007
(51) Int. Cl.: G01D 5/245, G01D 5/347

(54) **Verfahren und Vorrichtung zum Bestimmen von Positionen**
Method and device for determining positions
Procédé et dispositif destinés à la détermination de positions

(30) Priorität: 07.12.2006 CH 19922006
(43) Veröffentlichungstag der Anmeldung: 11.06.2008
(73) Patentinhaber: Leica Geosystems AG, 9435 Heerbrugg (CH)
(72) Erfinder: HANNS, Günther, CH-9443, Widnau (CH); LIPPUNER, Heinz, CH-9445, Rebstein (CH)
(74) Vertreter: Kaminski Harmann

(56) Entgegenhaltungen:
- WO-A-2006/107363
- US-A- 4 668 862

## Beschreibung

Die Erfindung bezieht sich auf ein Verfahren nach dem Oberbegriff des Anspruches 1 und eine Vorrichtung nach dem Oberbegriff des Anspruches 9.

Zum Bestimmen von Relativpositionen zwischen zwei Elementen werden in vielen Anwendungsbereichen ein Träger mit mindestens einer Strichcode-Spur und eine Sensoranordnung zum Erfassen mindestens einer Strichcode-Information verwendet. Die erfasste Strichcode-Information ermöglicht die Bestimmung der Sensorposition relativ zum Strichcode, bzw. zum Träger mit dem Strichcode. Bei der Ermittlung von Linearpositionen werden linear verlaufende Strichcodes bzw. Teilungen verwendet. Bei der Bestimmung von Winkelpositionen werden Strichcodes in der Form von Kreisteilungen verwendet.

Zur Positionserfassung gibt es einerseits Lösungen, welche direkt die Absolutposition erfassen und andererseits solche, die eine Ausgangsposition und Inkrement-Information erfassen. Die Strichcode-Spuren sind an die jeweilige Lösung angepasst.

Positionsbestimmungen mit Inkrement-Informationen müssen von einem exakt erfassbaren Nullpunkt ausgehen und Bewegungen in beiden Richtungen exakt erfassen. Die Bewegungsrichtung wird beispielsweise über die Phasenlage zwischen den Signalen von zwei entlang des Strichcodes versetzt angeordneten Sensoren ermittelt. Für eine hohe Genauigkeit müssen äusserst kleine Strichabstände, mehrere Spuren nebeneinander und/oder Interpolationsmethoden eingesetzt werden.

Bei der Erfassung einer absoluten Position können Codierungen auf mehreren Spuren oder Codierungen auf einer Spur, Ablesungen mit einem Sensorarray, beispielsweise einem Diodenarray, oder dynamische Ablesungen, beispielsweise mit einer drehenden Kreisteilung, eingesetzt werden.

Eine Winkelposition kann beispielsweise mit einer Kreisteilung und einem sich über einen Abschnitt der Kreisteilung erstreckenden Sensorarray, insbesondere einem Diodenarray, exakt erfasst werden. Dazu ist die Kreisteilung beispielsweise in absolut kodierte Intervalle aufgeteilt, wobei der Sensorarray die Intervallnummer abliest und daraus eine grobe Winkelbestimmung ableitet. Um einen exakten Winkelwert zu erhalten, wird aus den Intensitätswerten des Sensorarrays die Position einer Intervallmarke relativ zum Sensorarray ermittelt.

Die Schriften EP 0085 951 B1 und DE 199 39 643 A1 beschreiben verschiedene Lösungen zur Bestimmung der Position der Intervallmarke. Gemäss EP 0085 951 B1 wird der Schwerpunkt der Intervallmarke ermittelt. In DE 199 39 643 A1 wird die Position der Intervallmarke bestimmt, indem die Flankenpositionen von vielen Teilungs-Strichen erfasst und daraus ein einziger Feinwert ermittelt wird.

Für exakte absolute Positionsbestimmungen werden Auswertungszeiten benötigt, die bei verschiedenen Anwendungen zu lange sind.

Aus der DE 35 28 955 A1 ist eine Winkelmessung für geodätische Geräte bekannt, bei der ein rotierender Teilkreis sowohl eine absolut codierte Teilung als auch eine Inkrementteilung umfasst. Die Winkelgrösse wird aus Ablesungen der beiden Teilungen ermittelt. Der Aufwand für die beiden Teilungen und die beiden Ablesungen ist zu gross.

Aus der DE 41 25 865 A1 ist eine Lösung bekannt, bei der mit mehreren nebeneinander verlaufenden Inkrementalteilungen, die unterschiedliche Teilungsperioden aufweisen, auch eine absolute Positionsbestimmung ermöglicht wird.

Aus der DE 44 36 784 A1 ist eine Lösung bekannt, bei der eine inkrementale Strichteilung, also eine Spur, gleichzeitig einen Code umfasst, welcher eine Absolut-Positionsbestimmung ermöglicht. Der Code wird dadurch gebildet, dass die Striche der Teilung eine unterschiedliche Breite besitzen, ihre Mittellinien aber konstante Abstände aufweisen. Dieser absolute Code wird von einem CCD-Array ausgelesen. Ein inkrementaler Lesekopf ermöglicht die Inkrement-Positionsbestimmung. Die Absolut- und die Inkrement-Positionsbestimmung können gegenseitig auf Plausibilität geprüft werden. Es kann auch ein Exzenterfehler eliminiert werden. Gegebenenfalls wird die absolute Positionsbestimmung nur in grösseren zeitlichen Abständen durchgeführt und dazwischen wird die Inkrement-Positionsbestimmung verwendet. Aus der WO 2006/107363 A1 ist eine weitere Lösung aus dem Stand der Technik bekannt.

Weil die bekannten Lösungen aufwändig und langsam sind, besteht, die Aufgabe der vorliegenden Erfindung darin, eine einfache und schnelle Lösung zu finden, die immer eine genaue Positionsbestimmung ermöglicht.

Diese Aufgabe wird durch die Merkmale der Ansprüche 1 und 9 gelöst. Die abhängigen Ansprüche beschreiben alternative bzw. vorteilhafte Ausführungsvarianten.

Beim Lösen der erfinderischen Aufgabe wurde erkannt, dass bei vielen Anwendungen eine exakte Ablesung nicht nur im unbewegten Zustand, sondern auch bereits beim Drehen oder Verschieben erwünscht ist. Im unbewegten Zustand ist eine langsame Positionsbestimmung am Absolutcode zweckmässig. Im bewegten Zustand muss aber eine schnelle Messung durchgeführt werden. Damit die erfinderische Bestimmungsvorrichtung einfach aufgebaut ist, wird die Teilung für die Absolutbestimmung zur Inkrement-Bestimmung verwendet. Es kann auf eine weitere Teilung verzichtet werden. Damit die Ablesung schnell erfolgt, wird nur ein Teil der Sensorsignale ausgewertet.

Bei den bekannten Inkrementbestimmungen wird die Bewegung von gleichmässig beabstandeten Strichen aufgrund der Hell/Dunkel-Wechsel an einer Stelle, bzw. mit einem Sensor, abgetastet. Dies ist mit Strichen eines Absolutcodes nicht möglich. Weil die Striche von Absolutcodierungen unterschiedlich beabstandet sind, muss für das Erfassen einer Inkrementinformation eine neue Lösung gefunden werden.

Bei Absolutteilungen mit Intervallmarken, beispielsweise in der Form von Strichen mit einer speziellen Breite, kann die Bewegung einer Intervallmarke im Bereich des Sensorarrays erfasst werden. Es muss lediglich die Position einer Intervallmarke verfolgt werden. Anstelle der Verfolgung einer Intervallmarke, kann auch ein beliebiger Strich oder die Position des Schwerpunktes mehrerer Striche verfolgt werden. Dabei wird der Schwerpunkt von n Strichen berechnet und die Veränderung dieses Schwerpunktes während der Bewegung verfolgt. Die Genauigkeit der Schwerpunktbestimmung kann dabei den Erfordernissen angepasst werden, z.B durch die Digitalisierungsgenauigkeit (Anzahl Bits). Wenn die verfolgte Intervallmarke bzw. der verfolgte Schwerpunkt in einen Randbereich des Sensorarrays gelangt, wird zur Verfolgung einer zentraler gelegenen Intervallmarke bzw. eines zentraler gelegenen Schwerpunktes gewechselt. In einem Beispiel mit einer Absolutcodierung wird also gemäss einer ersten Variante ein Strich ausgewählt und verfolgt solange er im Bereich des Sensorarrays, insbesondere eines Diodenarrays, sichtbar ist. Kurz bevor er aus dem Sensorarray austritt wird auf den nächsten gleichartigen Strich gesprungen. Bei einer zweiten Variante wird die Bewegung des Schwerpunktes von n Strichen auf einem Sensorarray erfasst, gegebenenfalls sind die Striche so charakterisiert, dass sie verfolgt werden können.

Der absolute Code kann in bewegungsfreien Zeiten erfasst werden. Bei Bewegung wird vorzugsweise nur die erfinderische Inkrementerfassung durchgeführt. Damit wird von einer Anordnung für eine Absolut-Positionsbestimmung mittels Sensorarray bei Bewegung eine inkrementelle und schnelle Messung ermöglicht. In einem Beispiel mit einer Incrementcodierung wird im Rahmen der ersten Variante ebenfalls ein Strich ausgewählt und verfolgt solange er im Bereich des Sensorarrays sichtbar ist. Der Unterschied zwischen dieser erfinderischen Inkrementbestimmung und einer bekannten Inkrementbestimmung besteht darin, dass neu die Bewegung mindestens eines Striches auf dem Sensorarray verfolgt wird. Bei den bekannten Inkrementbestimmungen wird lediglich das Durchlaufen von Strichen bei einer Sensorposition erfasst. Mit der Inkrementbestimmung kann auf sehr feine Teilungen verzichtet werden. Für die Genauigkeit ist es wichtig, dass der Sensorarray zusammen mit der Abbildung des Strichcodes auf den Sensorarray eine feine Auflösung der Bewegung des Strichcodes ermöglicht.

Zum Durchführen des Verfahrens wird eine Inkrement-Bestimmungseinrichtung eingesetzt, welche zur Bestimmung der aktuellen Position zumindest einen Strich 1, 2 des Absolutcodes oder gegebenenfalls eines Inkrementcodes auswählt, eine Positionsverschiebung des zumindest einen ausgewählten Striches 1, 2 im Bereich des Sensorarrays 3 erfasst und daraus mittels einer vorgängig erfassten Position die geänderte Position berechnet.

Die Zeichnungen erläutern die Erfindung anhand von drei Ausführungsbeispielen. Sie stellen schematisch je einen Ausschnitt eines Strichcodes und einen Sensorarray dar. Der Strichcode ist zwar jeweils als linearer Code dargestellt, soll aber auch als Ausschnitt einer Kreisteilung verstanden werden. Die Abstände zwischen den dargestellten Strichen sind unterschiedlich gross, weil es sich um einen Absolutcode mit kodierten Intervallen handelt. Zur groben Bestimmung einer Position kann eine Intervallnummer abgelesen werden. Um einen exakten Positionswert zu erhalten, wird aus den Intensitätswerten des Sensorarrays die Position einer Intervallmarke relativ zum Sensorarray ermittelt.

Bei einem Inkrementcode wären die Abstände zwischen den Strichen immer gleich gross. Um einen Nullpunkt ermitteln zu können, wäre eine entsprechende Nullpunktsmarkierung vorgesehen. Nach dem Erfassen des Nullpunktes kann aus den Intensitätswerten des Sensorarrays die Änderung der Position mindestens eines Striches auf dem Sensorarray ermittelt werden.

Zumindest einmal wird mittels des Absolutcodes bzw. einer Nullpunktsmarkierung oder durch Setzen einer Ausgangsrichtung mittels Software eine exakte Ausgangsposition bestimmt. Mit den anhand der Figuren beschriebenen Verfahren, können Striche eines Strichcodes für eine Inkrementbestimmung mit einem Sensorarray verwendet werden.

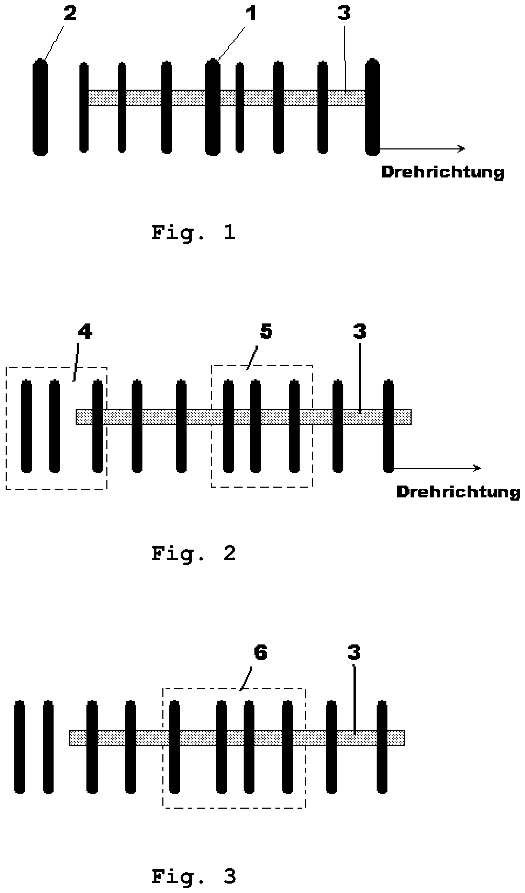

Fig. 1 zeigt vertikale Striche eines Strichcodes. Zur Bestimmung der aktuellen Position des Trägers mit dem Strichcode relativ zu einem Sensorarray 3 wird während aufeinander folgender Zeitabschnitte je zumindest ein ausgewählter Strich 1 verfolgt. Positionen des zumindest einen ausgewählten Striches 1 werden vom Sensorarray in vorgegebenen Zeitintervallen erfasst und daraus wird mittels einer vorgängig erfassten Ausgangsposition die aktuelle Position berechnet. Weil sich der Strichcode gemäss der angezeigten Bewegungs- insb. Drehrichtung R relativ zum Sensorarray 3 bewegt, wird der Strich 1 aus dem Bereich des Sensorarrays hinausbewegt. Bevor oder gerade wenn der Strich 1 aus dem Messfenster des Sensorarrays 3 verschwindet, wird für einen nächsten Zeitabschnitt auf die Verfolgung eines frisch in das Messfenster eingetretenen Striches 2 gewechselt.

Es kann irgend ein Strich verfolgt werden. Bei einem Absolutcode wird beispielsweise eine Intervallmarke verfolgt. Weil nur wenige Intervallmarken gleichzeitig im Messfenster des Sensorarrays 3 sind, ist die Gefahr klein, dass von einer Positionsbestimmung zur nächsten versehentlich die Position eines anderen Striches erfasst wird. Um die Verwechslungsgefahr klein zu halten, kann ein verfolgter Strich auch über mindestens einen Abstand zu einem anschliessenden Strich, vorzugsweise aber über zwei Abstände zu beidseits anschliessenden Strichen, charakterisiert werden. Wenn der Sensorarrays mit einer hohen Frequenz ausgewertet wird und die Bewegung des Strichcodes langsam ist, so ändert sich die Position des verfolgten Striches so langsam, dass es von Auswertung zu Auswertung immer der nächstliegende Strich ist.

Der Sensorarray 3 ist vorzugsweise ein Diodenarray. Es versteht sich von selbst, dass alle linienförmigen Sensoranordnungen eingesetzt werden können, welche die Position eines Striches erfassbar machen.

Fig. 2 zeigt eine Ausführungsform bei der nicht Einzelstriche verfolgt werden, sondern Strichpakete. Ein aktuell verfolgtes Strichpaket 5 wird aufgrund der eingezeichneten Bewegungs- insb. Drehrichtung R rechts aus dem Messfenster des Sensorarrays 3 austreten. Zur weiteren Positionserfassung wird dann auf die Verfolgung eines weiteren Strichpakets 4 gewechselt.

Zum Erkennen eines ausgewählten Strichpaketes kann mindestens eine charakteristische Eigenschaft des Paketes verwendet werden, beispielsweise die relativen Abstände zwischen den Strichen und/oder Strichbreiten. Wenn im Messfenster des Sensorarrays 3 gleichzeitig nur ein Strichpaket mit den gleichen Strichabständen liegen kann, so ist das versehentliche Bestimmen einer Position eines anderen Strichpaketes ausgeschlossen. Die Position eines Strichpaketes wird beispielsweise als Schwerpunktsposition festgelegt.

Diese Ausführungsform ist für Inkrementcodes mit gleich beabstandeten Strichen nicht vorteilhaft, weil sich die Strichpakete nicht voneinander unterscheiden.

Fig. 3 zeigt eine bevorzugte Ausführungsform bei der auf dem Messfenster des Sensorarrays 3 ein Teilfenster 6 definiert ist. Innerhalb dieses Teilfensters 6 wird die Schwerpunktverschiebung der darin enthaltenen Striche verfolgt. Kommt ein neuer Strich ins Teilfenster 6 so wird ein neuer Gesamtschwerpunkt mit diesem Strich erfasst und verfolgt. Analog wird beim Austritt eines Striches aus dem Teilfenster 6 ein neuer Gesamtschwerpunkt ohne diesen Strich erfasst und weiter verfolgt. Diese Ausführungsform kann mit allen Strichcodes verwendet werden.

Das Wechseln des Schwerpunktes entspricht dem Wechsel von einem Strichpaket zu einem anderen, bzw. von zumindest einem Strich zu einem anderen. Beim Wechsel des Schwerpunktes wird meist die Anzahl der Striche im fixen Teilfenster 6 um einen erhöht oder erniedrigt. Wenn gleichzeitig ein Strich eintritt und einer austritt, so wechselt die Schwerpunkt-Position abrupt ohne dass sich dabei die Anzahl der Striche im Teilfenster 6 ändert.

Wenn die Abstände der Sensoren des Sensorarrays 3 klar kleiner sind als der minimale Abstand zwischen den Strichen, bzw. den auf den Sensorarray abgebildeten Strichen, so muss bei gängigen Bewegungen der Schwerpunkt nicht ununterbrochen gewechselt werden. Der Schwerpunkt muss frühestens gewechselt werden, wenn ein Strich so viele Sensoren überstrichen hat, wie mindestens zwischen zwei Strichen liegen.

Bei der beschriebenen Verwendung eines Teilfensters handelt es sich um eine passive Wahl zumindest eines Striches, weil die Wahl durch den Ein- und Austritt von Strichen ins bzw. aus dem fixen Fenster 6 erfolgt. Bei der passiven Wahl fällt der Bearbeitungsaufwand für das aktive Auswählen und richtige Verfolgen mindestens eines Striches innerhalb des gesamten Messfensters des Sensorarrays 3 weg. Es muss lediglich das Ein- und Austreten von Strichen ins Teilfenster 6 erkannt werden, was zu einer abrupten Verschiebung des Schwerpunktes führt.

Das Teilfenster 6 wird so gewählt, dass immer mindestens ein Strich darin liegt. Wenn nur wenige Striche im Teilfenster liegen ist der Bearbeitungsaufwand zum Bestimmen der Schwerpunktslage klein. Das Fenster kann nach verschiedenen Gesichtspunkten festgelegt werden. Beispielsweise soll eine geringste Bildverzerrung, eine geringste Sensorverschmutzung, eine schnellste Auslesezeit oder eine optimale Beleuchtung vorliegen.

Die Grösse und Lage des Teilfensters 6 sind vorzugsweise fix, gegebenenfalls aber wird die Grösse und/oder Lage entsprechend dem jeweiligen Messprozedere geändert.

## Patentansprüche

1. Verfahren zum Bestimmen von Positionen eines Strichcodes auf einem Träger relativ zu einem Sensorarray (3), wobei der Sensorarray (3) zumindest einmal die Lage von Strichen des Strichcodes im Bereich des Sensorarrays (3) ermittelt und daraus eine Position bestimmt, sowie die Strichcode-Spur insbesondere einen Absolutcode bildet, wobei zumindest ein Strich (1) des Strichcodes ausgewählt, eine Positionsverschiebung des zumindest einen ausgewählten Striches (1) im Bereich des Sensorarrays (3) erfasst und daraus mittels einer vorgängig bestimmten Position die aktuelle Position ermittelt wird, wobei zur Bestimmung der Positionsverschiebung der Schwerpunkt mehrerer Striche (4, 5) verfolgt wird, **dadurch gekennzeichnet, dass**
abhängig von der Bewegungsgeschwindigkeit des Schwerpunktes die Anzahl der zur Bestimmung des Schwerpunktes verwendeten Striche geändert wird, wobei bei höherer Bewegungsgeschwindigkeit weniger und bei tieferer Bewegungsgeschwindigkeit mehr Striche verwendet werden.

2. Verfahren nach Anspruch 1,
**dadurch gekennzeichnet, dass**
zur Verfolgung eines zentraler gelegenen Schwerpunktes gewechselt wird, wenn der verfolgte Schwerpunkt in einen Randbereich des Sensorarrays (3) gelangt.

3. Vorrichtung zum Bestimmen von Positionen mit einem Strichcode auf einem Träger und mit einem Sensorarray (3) zum Erfassen mindestens einer Strichcode-Information, wobei der Sensorarray (3) zur Bestimmung einer Position zumindest einmal die Lage von Strichen des Strichcodes im Bereich des Sensorarrays (3) erfassbar macht und der Strichcode insbesondere einen Absolutcode bildet, wobei eine Inkrement-Bestimmungseinrichtung eingesetzt ist, welche zur Bestimmung der aktuellen Position zumindest einen Strich (1, 2) des Strichcodes auswählbar und eine Positionsverschiebung des zumindest einen ausgewählten Striches (1, 2) im Bereich des Sensorarrays (3) erfassbar macht, wobei daraus mittels einer vorgängig erfassten Position die geänderte Position zu berechnen ist, wobei zur Bestimmung der Positionsverschiebung der Schwerpunkt mehrerer Striche (4, 5) verfolgbar ist, **dadurch gekennzeichnet, dass**
abhängig von der Bewegungsgeschwindigkeit des Schwerpunktes die Anzahl der zur Bestimmung des Schwerpunktes verwendeten Striche änderbar ist, wobei bei höherer Bewegungsgeschwindigkeit weniger und bei tieferer Bewegungsgeschwindigkeit mehr Striche verwendet werden.

## Claims

1. Method for determining positions of a bar code on a support relative to a sensor array (3), the sensor array (3) determining at least once the position of lines of the bar code in the region of the sensor array (3) and determining a position therefrom, and the bar code trace forming in particular an absolute code, wherein at least one line (1) of the bar code is selected, displacement of the position of the at least one selected line (1) in the region of the sensor array (3) is registered and the actual position is determined therefrom by means of a previously determined position,
wherein for determining the displacement of the position, the centre of gravity of a plurality of lines (4, 5) is tracked,
**characterized in that** the number of lines used for determining the centre of gravity is changed depending on the speed of movement of the centre of gravity, fewer lines being used in the case of a higher speed of movement and more lines being used in the case of a lower speed of movement.

2. Method according to Claim 1, **characterized in that** there is a change over to the tracking of one centrally located centre of gravity if the tracked centre of gravity enters an edge region of the sensor array (3).

3. Apparatus for determining positions, comprising a bar code on a support and comprising a sensor array (3) for registering at least one piece of bar code information, the sensor array (3) making it possible to register the position of lines of the bar code in the region of the sensor array (3) at least once for determining a position and the bar code forming in particular an absolute code, wherein an increment determination device is used which, for determining the actual position, makes it possible to select at least one line (1, 2) of the bar code and to register a displacement of the position of the at least one selected line (1, 2) in the region of the sensor array (3), it being possible to calculate the changed position therefrom by means of a previously determined position,
wherein for determining the displacement of the position, the centre of gravity of a plurality of lines (4, 5) is tracked,
**characterized in that** the number of lines used for determining the centre of gravity is changed depending on the speed of movement of the centre of gravity, fewer lines being used in the case of a higher speed of movement and more lines being used in the case of a lower speed of movement.

## Revendications

1. Procédé destiné à définir des positions d'un code à barres sur un support relativement à un groupe de capteurs (3), le groupe de capteurs (3) déterminant au moins une fois l'emplacement de barres du code à barres dans la zone du groupe de capteurs (3) et définissant à partir de cela une position, de même que la piste du code à barres forme en particulier un code absolu, au moins une barre (1) du code à barres étant sélectionnée, un déplacement de position de la barre (1) sélectionnée au moins au nombre de un étant détecté dans la zone du groupe de capteurs (3) et la position actuelle étant déterminée à partir de cela au moyen d'une position définie antérieurement,
le centre de gravité de plusieurs barres (4, 5) étant poursuivi pour la définition du déplacement de position,
**caractérisé en ce que**
le nombre des barres utilisées pour la définition du centre de gravité est modifié en fonction de la vitesse de mouvement du centre de gravité, moins de barres étant utilisées en présence d'une vitesse de mouvement plus élevée, et davantage de barres étant utilisées en présence d'une vitesse de mouvement plus faible.

2. Procédé selon la revendication 1,
**caractérisé en ce**
**qu'**il y a passage à la poursuite d'un centre de gravité placé de façon centrée quand le centre de gravité poursuivi arrive dans une zone de bord du groupe de capteurs (3).

3. Dispositif destiné à définir des positions avec un code à barres sur un support et avec un groupe de capteurs (3) destiné à la détection d'au moins une information de code à barres, le groupe de capteurs (3) rendant, pour la définition d'une position, détectable au moins une fois l'emplacement de barres du code à barres dans la zone du groupe de capteurs (3), et le code à barres formant en particulier un code absolu, un système de définition d'incrément étant mis en oeuvre, lequel, pour la définition de la position actuelle, rend sélectionnable au moins une barre (1, 2) du code à barres et rend détectable un déplacement de position de la barre (1, 2) sélectionnée au moins au nombre de un dans la zone du groupe de capteurs (3), la position modifiée devant être calculée à partir de cela au moyen d'une position détectée antérieurement,
le centre de gravité de plusieurs barres (4, 5) pouvant être poursuivi pour la définition du déplacement de position,
**caractérisé en ce que**
le nombre des barres utilisées pour la définition du centre de gravité étant modifiable en fonction de la vitesse de mouvement du centre de gravité, moins de barres étant utilisées en présence d'une vitesse de mouvement plus élevée, et davantage de barres étant utilisées en présence d'une vitesse de mouvement plus faible.
